Europäisches Patentamt

European Patent Office

Office européen des brevets

(19)

(11) Publication number: **0 050 504**
**A1**

## (12) EUROPEAN PATENT APPLICATION

(21) Application number: **81304866.7**

(22) Date of filing: **19.10.81**

(51) Int. Cl.³: **A 01 N 61/00,** A 01 N 45/00
// (A01N45/00, 33/12)

(30) Priority: **20.10.80 GB 8033776**
**08.07.81 GB 8121071**

(43) Date of publication of application: **28.04.82**
**Bulletin 82/17**

(84) Designated Contracting States: **AT BE CH DE FR IT LI LU NL SE**

(71) Applicant: **Sampson, Michael James, 21 The Avenue, Chichester Sussex (GB)**

(72) Inventor: **Sampson, Michael James, 21 The Avenue, Chichester Sussex (GB)**

(74) Representative: **Crampton, Keith John Allen et al, D YOUNG & CO 10 Staple Inn, London WC1V 7RD (GB)**

(54) Mechanism for de-repression control.

(57) Certain spedified growth stimulators, e.g. gibberellins, are applied to crop plants in order to counteract the apical-dominance-suppressing effect of a plant-growth regulator such as chlorocholine chloride. The growth stimulator is preferably applied after the plant-growth regulator.

EP 0 050 504 A1

1

## MECHANISM FOR DE-REPRESSION CONTROL

The use of growth regulators, especially Chlormequat
(Chlorocholine chloride or 2-chloroethyl trimethyl ammonium
chloride), in combination with biochemical adjuvants in a variety
of crops has been described in my prior PCT Application No.
GB 79/00050 (WO 79/00838) and corresponding U.K. Application No.
7918957 (2030452) and its use without such adjuvants on a range
of broad-leaf crops in U.K. Patent Application No. 8031575. The
use of coating formulations with such growth regulators, including
their application in the autumn to cereal crops, has been described
in my prior PCT Application No. GB 80/00116 (WO 81/00187) and
corresponding U.K. Application No. 8022640 (2057265).

One aim of such treatments is to suppress apical dominance.
Apical dominance means the over-development of one part of a plant
against another. It is the mechanism by which, in a cereal plant,
one shoot suppresses the development of those shoots that develop
after it and the development of grains within the ear may consequently be aborted or reduced. Similarly in many broad-leaf
plants the mechanism ensures the development of main shoots at the
expense of others to such an extent that a reduction in yield
potential is caused. Thus, by suppressing apical dominance, an
increase in yield may be obtained. For this purpose the chlormequat
as a 460 g/l solution is preferably applied in amounts from 1 fluid
ounce to 10 pints per acre, i.e. from 70 ml to 14 litres per hectare,
and it may be applied in conventional manner by spraying in a solution diluted with 100 to 5000 times its volume of water. Other additives such as surfactants may also be included and the time of application is preferably from two weeks after the first appearance of the seedlings until two weeks before flowering.

In pod-bearing crops the increase in yield results from increase in the number of pods per plant, increase in the size of pods and of the number and size of seeds that they can contain. Increase in fresh weight of root and sugar content are obtained in the case of sugar beet. However, the suppression of apical dominance may mean that a point is reached at which the pattern of apical dominance may no longer be readily initiated by a cereal plant or by a broad-leaf plant. Thus, where the abovementioned formulations for the suppression of apical dominance have been used to control this aspect of plant behaviour until such a time as the plant can no longer reinstitute it, it can be beneficial to treat the plant with formulations containing those hormones and other compounds listed below that are capable of inducing the development and growth that are normally produced by the plant during the establishment of apical dominance or which can be wholly or partly substituted for an external stimulus such as cold weather or day-length.

The present invention provides a method of improving the yield of crop plants treated with a growth regulator in such an amount that apical dominance is suppressed, comprising further treating the plants with a stimulator composition containing one or more of the following ingredients:

a gibberellin of naturally occurring or synthetic type;

1-naphthyl methyl carbamate, which is also known as Carbaryl or 'Sevin';

4-chlorophenoxy acetic acid, which is also known as 4-CPA or 'Sure-Set';

2,4-dichlorophenoxyacetic acid, which is also known as 2,4-D or by many trade names;

Indol-3-yl-acetic acid, which is also known as Indole-3-acetic acid, IAA, Auxin or Heteroauxin;

4-(indol-3-yl) butyric acid, which is also known as Indole-3-butyric acid, IBA, 'Seradix', 'Hormodin' and others;

1-naphthylacetic acid, which is also known as α-naphthaleneacetic acid, NAA, 'Planofix', 'Tre-hold', 'Anastop' and others;

2-(1-naphthyl) acetamide, which is also known as NAAm or 'Amid-thin';

2-naphthyloxyacetic acid, which is also known as β-naphthoxyacetic acid, 2-NOA, BNOA, NOXA, 'Betapal' or 'Fulset';

2,4,5-trichlorophenoxyacetic acid, which is also known as 2,4,5-T and by many trade names;

2-(2,4,5-trichlorophenoxy)propionic acid, which is also known as 2,4,5-TP, Fenoprop, 'Silvex' or 'Nu-set';

6-benzylaminopurine, which is also known as BAP, BA, 'Accel' or 6-benzyladenine;

6-benzyladenosine, which is also known as 6-BAR;

N,N'-diphenylurea, which is also known as DPU;

6-(benzylamino)-9-(2-tetrahydropyranyl)-9-H-purine, which is also known as PBA;

catechol; tricontanol;

phlordizin; and

phloretic acid.

The gibberellin compound may be:

(3S, 3aS, 4S, 4aS, 6S, 8aR, 8bR, 11S)-6,11-dihydroxy-3-methyl-12-methylene-2-oxo-4a,6-ethano-3,8b-prop-1-enoperhydroindeno-[1,2-b]-furan-4-carboxylic acid, which is also known as $GA_3$, GA, Gibberellin A, gibberellic acid, 'Berelex', 'Gibrofit', 'Activol' and others;

Gibberellin $A_2$, which is also known as $GA_2$;

A mixture of approximately 30% $GA_4$ and 70% $GA_7$, which is also known as $GA_{4/7}$ or 'Pro-Gibb 47';

A mixture of $GA_1$ and $GA_2$, which is also known as $GA_{1/2}$ or 'Gibrescol';

or a plant or microorganism extract containing one or more gibberellins, e.g. gibberellin-containing extracts of <u>Gibberella fujikuroi</u> (a fungus) (see Tetrahedron, 1960, Vol 11, pp 60 to 66).

In accordance with a preferred embodiment of the present invention, a crop plant has been previously treated with an apical-dominance-suppressing growth-regulatory formulation, such as those described in the PCT and U.K. Applications mentioned above and in U.K. Application No. 8015580 (2052260), is treated with such a hormone formulation.

The apical-dominance suppressing agent used in the growth-regulating composition may be one or more of:

4

0050504

Piperidinium 1,1-dimethyl chloride, which is also known as Mepiquat chloride;

2-chloroethyl-tris-(2-methoxyethoxy)silane, which is also known as 'Alsol' or CGA 15281;

5-chloro-3-methyl-4-nitro-1H-pyrazole, which is also known as CMNP or 'Release';

3-[-2-(3,5-dimethyl-2-oxycyclohexyl)-2-hydroxyethyl]-glutarimide, which is also known as Cycloheximide, CHI, Actidione or 'Acti-aid';

Glyoxal dioxime, which is also known as Glyoxime or 'Pik-off';

2-chloroethylphosphonic acid, which is also known as Ethephon, CEPA, 'Ethrel', 'Cepha', 'Florel', 'Bromeflor' and others;

2-chloro-9-hydroxyfluorene-9-carboxylic acid methyl ester, which is also known as Chlorflurecol, Chlorflurenol, Morphactin or 'Maintain';

N-m-tolylphthalamic acid, which is also known as MTPA, 'Duraset' or 'Tomaset';

2,3,5-triiodobenzoic acid, which is also known as TIBA, 'Floral-tone' or 'Regim-8';

5-isopropyl-2-methyl-4-(piperidinocarbonyloxy)phenyl trimethylammonium chloride, which is also known as AMO 1618, 'Carvadan' or ACPC;

α-cyclopropyl-4-methoxy-α-(pyridimin-5-yl)-benzyl alcohol, which is also known as Ancymidol, EL-531, 'Quel', 'A-Rest', or 'Reducymol';

2-chloroethyltrimethyl ammonium chloride, which is also known as Chlormequat, Chlorocholine chloride, CCC, 'Cycocel' or 'Tur';

2,4-dichlorobenzyl tributyl phosphonium chloride, which is also known as Chlorphonium (chloride), CBBP or 'Phosphon';

N-dimethylaminosuccinamic acid, which is also known as Daminozide, B.995, B.9, DIMAS, SADH, 'Alar', 'Kylar', 'B-Nine' or 'Aminosol';

2,3:4,6-di-o-isopropylidene-α-L-xylo-2-hexulo-furanosonic acid, which is also known as Dikegulac (Na), 'Atrinal' or 'Cutlass'.

The application rate of the hormone would be at rates from 100 milligrams to 500 grams per acre (0.25 to 1250 g per hectare) applied in from 4 pints per acre (5.5 litres per hectare) using an ultra-low volume sprayer or up to 1,000 gallons per acre (about 11,000 litres per hectare) using conventional spraying equipment. The timing of application to a cereal crop could be before or after the initiation of the seed primordia while in a broad leaf crop it could be from some 2 weeks after germination up to 50% flowering.

Examples of crops that may be treated are barley, wheat, rice, oats, maize, sorghum, oilseed rape, peas, beans, soya, herbage grasses, potatoes, sugar beet and fruit-bearing trees and bushes.

The description above indicates that it is preferred to apply the stimulator (i.e. the composition containing the hormone and the apical-dominance-suppressing agent) after the growth regulator, but this order can be reversed if circumstances require or the stimulator and growth regulator can be applied simultaneously. As another possibility, three applications (two of one and one of the other) can be made in the order  growth regulator : stimulator : growth regulator or stimulator : growth regulator : stimulator.

The interval between application of the growth regulator and application of the stimulator will normally be from ten days to three months in the case of a crop that is harvested without over-wintering and from ten days to seven months in the case of a crop that is planted in autumn and harvested the following spring.

Application, which will normally be by spraying, is carried out where ground conditions permit, and the suitable time for application varies from crop to crop.

The effect of applying a composition containing gibberellic acid to a crop that had previously been treated with a growth regulator is shown in the following table.   Hele-Stone, Barleyquat, Halloween, Bettaquat and Podquat are all trade marks for growth-regulating compositions that are commercially available in the United Kingdom from Mandops (Agrochemical Specialists) Ltd.   These compositions all contain chlormequat (chlorocholine chloride) at a 46% weight/volume concentration.   They are of the type disclosed in U.K. Patent Applications Nos. 7918957 and 8022640 (UK-A-2030452 and UK-A-2057265 respectively).

The solutions of the materials are aqueous and the percentages on a volume basis.   In all cases Treatment 2 is carried out with gibberellic acid (15 ppm in aqueous solution).   The solutions are sprayed on the plants.

Jupiter Barley

| Treatment 1 | | Treatment 2 | Yield |
|---|---|---|---|
| Hele Stone | 1% solution, at 3-leaf stage | No | 112.2 |
| | | Yes, at flag-leaf emergence | 116.2 |
| Barleyquat | 0.75% solution, at 3-leaf stage | No | 109.7 |
| | | Yes, at flag-leaf emergence | 113.1 |
| Chlormequat | 0.75% solution, at 3-leaf stage | No | 100.9 |
| | | Yes, at flag-leaf emergence | 104.8 |
| | No | Yes, at flag-leaf emergence | 98.6 |
| | No | No (control) | 100 |

Mardler Wheat

| Treatment 1 | | Treatment 2 | Yield |
|---|---|---|---|
| Halloween | 0.75% solution, at 3-leaf stage | No | 109.2 |
| | | Yes, at flag-leaf emergence | 112.4 |
| Bettaquat | 0.75% solution, at 3-leaf stage | No | 107.7 |
| | | Yes, at flag-leaf emergence | 111.1 |
| Chlormequat | 0.75% solution, at 3-leaf stage | No | 101.1 |
| | | Yes, at flag-leaf emergence | 104.6 |
| | No | Yes, at flag-leaf emergence | 98.1 |
| | No | No (control) | 100 |

Kelvedon Wonder Peas

| Treatment 1 | | Treatment 2 | Yield |
|---|---|---|---|
| Podquat | 1% solution, 15 days after germination | No | 114.2 |
| | | Yes, 6 weeks after Treatment 1 | 117.9 |
| Chlormequat | 0.75% solution, 15 days after germination | No | 103.1 |
| | | Yes, 6 weeks after Treatment 1 | 105.9 |
| | No | Yes, 8 weeks after germination | 98.8 |
| | No | No (control) | 100 |

7

## CLAIMS

1.      A method of improving the yield of crop plants treated with a growth regulator in such an amount that apical dominance is suppressed, comprising further treating the plants with a stimulator composition containing one or more of the following ingredients:

a gibberellin of naturally occurring or synthetic type;

1-naphthyl methyl carbamate;

4-chlorophenoxy acetic acid;

2,4-dichlorophenoxyacetic acid;

Indol-3-yl-acetic acid;

4-(indol-3-yl) butyric acid;

1-naphthylacetic acid;

2-(1-naphthyl) acetamide;

2-naphthyloxyacetic acid;

2,4,5-trichlorophenoxyacetic acid;

2-(2,4,5-trichlorophenoxy)propionic acid;

6-benzylaminopurine;

6-benzyladenosine;

N,N'-diphenylurea;

6-(benzylamino)-9-(2-tetrahydropyranyl)-9-H-purine;

catechol; tricontanol;

phlordizin;   and

phloretic acid.

8

2.      A method as claimed in Claim 1 in which the treatment with the stimulator composition follows the treatment with the growth regulator.

3.      A method as claimed in Claim 1 in which the stimulator composition and growth regulator are applied simultaneously.

4.      A method as claimed in Claim 1 in which the treatment with the stimulator composition is carried out twice:  once before and once after the treatment with growth regulator.

5.      A method as claimed in Claim 1 in which the treatment with the growth regulator is carried out twice:  once before and once after the treatment with the stimulator composition.

6.      A method as claimed in any one of Claims 2 to 5 in which at least ten days elapse between treatments.

7.      A method as claimed in any one of Claims 1 to 6 in which the stimulator is a gibberellin-containing extracts of _Gibberella_ fujikuroi (a fungus), gibberellic acid, or gibberellin $A_2$, a mixture of approximately 30% $GA_4$ and 70% $GA_7$, or the mixture of $GA_1$ and $GA_2$ known as $GA_{1/2}$.

8.      A method as claimed in any one of Claims 1 to 7 in which the plant-growth regulator is chlormequat.

9.      A method as claimed in any one of Claims 1 to 7 in which the plant-growth regulator is:

piperidinium 1,1-dimethyl chloride;

2-chloroethyl-tris-(2-methoxyethoxy)silane;

5-chloro-3-methyl-4-nitro-1H-pyrazole;

3-[-2-(3,5-dimethyl-2-oxycyclohexyl)-2-hydroxyethyl]-glutarimide;

Glyoxal dioxime;

2-chloroethylphosphonic acid;

2-chloro-9-hydroxyfluorene-9-carboxylic acid methyl ester;

N-m-tolylphthalamic acid;

2,3,5-triiodobenzoic acid;

5-isopropyl-2-methyl-4-(piperidinocarbonyloxy)phenyl trimethylammonium chloride;

α-cyclopropyl-4-methoxy-α-(pyridimin-5-yl)-benzyl alcohol;

2,4-dichlorobenzyl tributyl phosphonium chloride;

N-dimethylaminosuccinamic acid;

2,3:4,6-di-o-isopropylidene-α-L-xylo-2-hexulo-furanosonic acid.

10. A method as claimed in any one of Claims 1 to 9 in which from 0.25 to 1250 g of the stimulant in from 5.5 to 11000 litres of water are sprayed on each hectare of the crop.

11. A method as claimed in any one of Claims 1 to 10, as applied to the treatment of oilseed rape.

12. A method as claimed in any one of Claims 1 to 10, as applied to the treatment of barley, wheat, rice, oats, maize or sorghum.

13. A method as claimed in any one of Claims 1 to 10, as applied to the treatment of peas or beans.

0050504

14. A method as claimed in any one of Claims 1 to 10, as applied to the treatment of potatoes.

15. A method as claimed in any one of Claims 1 to 10, as applied to the treatment of sugar beet.

16. A method as claimed in any one of Claims 1 to 10, as applied to the treatment of fruit-bearing trees and bushes.

17. A method as claimed in any one of Claims 1 to 10, as applied to the treatment of herbage grass.

## DOCUMENTS CONSIDERED TO BE RELEVANT

| Category | Citation of document with indication, where appropriate, of relevant passages | Relevant to claim |
|---|---|---|
| X | PLANT PHYSIOLOGY, vol. 35, no. 3, May 1960 Bethesda, Maryland, US N.E. TOLBERT "(2-chloroethyl)-trimethylammoniumchloride and related compounds as plant growth substances. II. Effect on growth of wheat", pages 380-385 <br><br> * Page 385, left-hand column, paragraph 3 * | 1-17 |
| X | FR - A - 2 387 598 (W.W. SCHWABE et al.) <br><br> * Claims; page 1, page 5, lines 31-37 * | 1-17 |
| X | CHEMICAL ABSTRACTS, vol. 84, no. 19, May 10, 1976, page 142, abstract 131392m Columbus, Ohio, US N.I. POPRAVKO "Effect of chloro-choline chloride and gibberellin on the growth and development of potatoes in the winter period" & AGROKHIMIYA 1976, (1), 116-119. <br><br> * Abstract * | 1-17 |
| X | CHEMICAL ABSTRACTS, vol. 69, no.5, July 29, 1968, page 1697, abstract 18190w Columbus, Ohio, US G.E. OKOLOKO et al. "Enhancement of lateral bad growth in Colens blumei by (2-chloroethyl) trime-thylammonium chloride (CCC)" & PLANT CELL PHYSIOL (Tokyo) 1968, 9(2), 259-266. ./. | 1-17 |

**CLASSIFICATION OF THE APPLICATION (Int. Cl. 3)**

A 01 N 61/00
           45/00//
(A 01 N 45/00
           33/12)

**TECHNICAL FIELDS SEARCHED (Int.Cl. 3)**

A 01 N 61/00
           45/00
           33/12

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | |
|---|---|
| The present search report has been drawn up for all claims | |
| Place of search <br> The Hague | Date of completion of the search <br> 07-01-1982 | Examiner <br> DECORTE |

EPO Form 1503.1 06.78

| | European Patent Office | EUROPEAN SEARCH REPORT | 0050504 Application number EP 81 30 4866 -2- |
|---|---|---|---|

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | * Abstract * -- | | |
| X | R. WEGLER "Chemie der Pflanzenschutz- und Schädlingsbekämpfungsmittel", vol. 4, 1977, Springer-Verlag, Berlin, Heidelberg, New York, pages 10-63. * Page 27, last three lines to page 28, first line * ---- | 1-17 | |
| | | | TECHNICAL FIELDS SEARCHED (Int. Cl.³) |

EPO Form 1503.2   06.78